Europäisches Patentamt

European Patent Office

Office européen des brevets

(19)

(11) **EP 0 762 388 B1**

(12) **FASCICULE DE BREVET EUROPEEN**

(45) Date de publication et mention
de la délivrance du brevet:
**19.11.2003 Bulletin 2003/47**

(51) Int Cl.⁷: **G11B 5/31**

(21) Numéro de dépôt: **96401926.9**

(22) Date de dépôt: **10.09.1996**

(54) **Tête magnétique d'enregistrement/lecture**

Magnetaufzeichnungs-/-wiedergabekopf

Magnetic recording/reproducing head

(84) Etats contractants désignés:
**DE GB IT NL**

(30) Priorité: **12.09.1995 FR 9510658**

(43) Date de publication de la demande:
**12.03.1997 Bulletin 1997/11**

(73) Titulaire: **Thales**
**75008 Paris (FR)**

(72) Inventeur: **Lehureau, Jean-Claude,**
**Thomson CSF SCPI**
**92402 Courbevoie Cedex (FR)**

(56) Documents cités:
**EP-A- 0 475 397**

- **PATENT ABSTRACTS OF JAPAN vol. 014, no. 046 (M-0926), 26 Janvier 1990 & JP-A-01 275059 (SEIKO EPSON CORP), 2 Novembre 1989,**
- **PATENT ABSTRACTS OF JAPAN vol. 014, no. 025 (P-991), 18 Janvier 1990 & JP-A-01 264619 (SEIKO EPSON CORP), 20 Octobre 1989,**
- **PATENT ABSTRACTS OF JAPAN vol. 010, no. 308 (P-508), 21 Octobre 1986 & JP-A-61 120313 (SANYO ELECTRIC CO LTD), 7 Juin 1986,**
- **PATENT ABSTRACTS OF JAPAN vol. 011, no. 331 (P-630), 29 Octobre 1987 & JP-A-62 114112 (MATSUSHITA ELECTRIC IND CO LTD), 25 Mai 1987,**
- **PATENT ABSTRACTS OF JAPAN vol. 008, no. 117 (P-277), 31 Mai 1984 & JP-A-59 024422 (TOKYO SHIBAURA DENKI KK), 8 Février 1984,**

**Description**

L'invention concerne une tête magnétique d'enregistrement/lecture et son procédé de réalisation, et plus particulièrement une tête magnétique planaire réalisée en couches minces de type planaire. Ce procédé permet, sans augmenter le nombre d'étapes technologiques, d'augmenter considérablement l'efficacité de la tête et permet d'utiliser des couches magnétiques et conductrices plus minces.

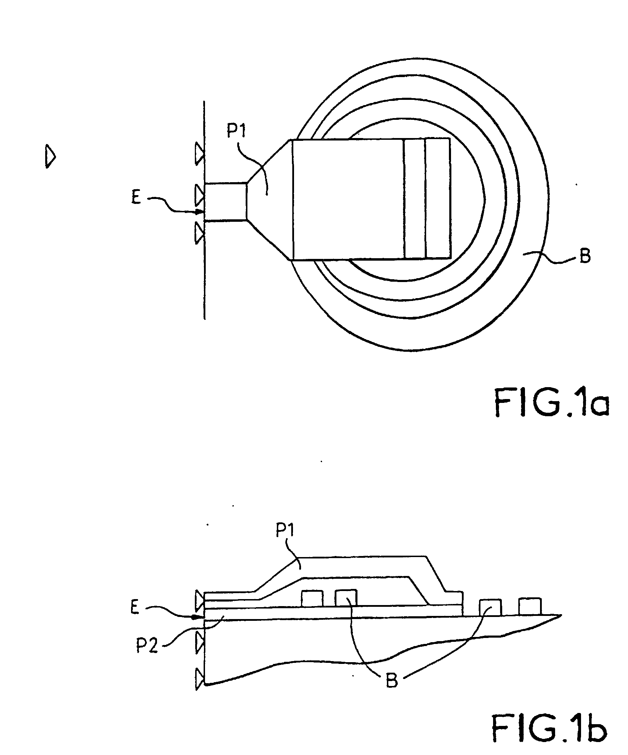

Les figures 1 a, 1 b montrent la structure d'une tête magnétique en couche mince de type traditionnel (non planaire). Cette tête comporte deux pôles magnétiques P1, P2 empilés, couplés magnétiquement à une extrémité pour fermer le circuit magnétique de la tête et comportant un entrefer E à l'autre extrémité. Un conducteur d'induction de champ magnétique B (bobinage) est situé entre les pôles P1, P2 pour induire un champ magnétique dans la tête. La zone active de la tête magnétique permettant de lire ou d'écrire des informations est située en bout de l'entrefer E (à gauche sur les figures 1 a, 1b). Cette tête est réalisée par dépôt et usinage photolithographique des couches constituant les pôles magnétiques, les conducteurs et les isolants. Le support est alors scié près de l'entrefer et la tête est polie suivant un plan perpendiculaire au plan de photolithographie. Ces têtes demandent des étapes de polissage non collectives et sont donc d'un coût élevé.

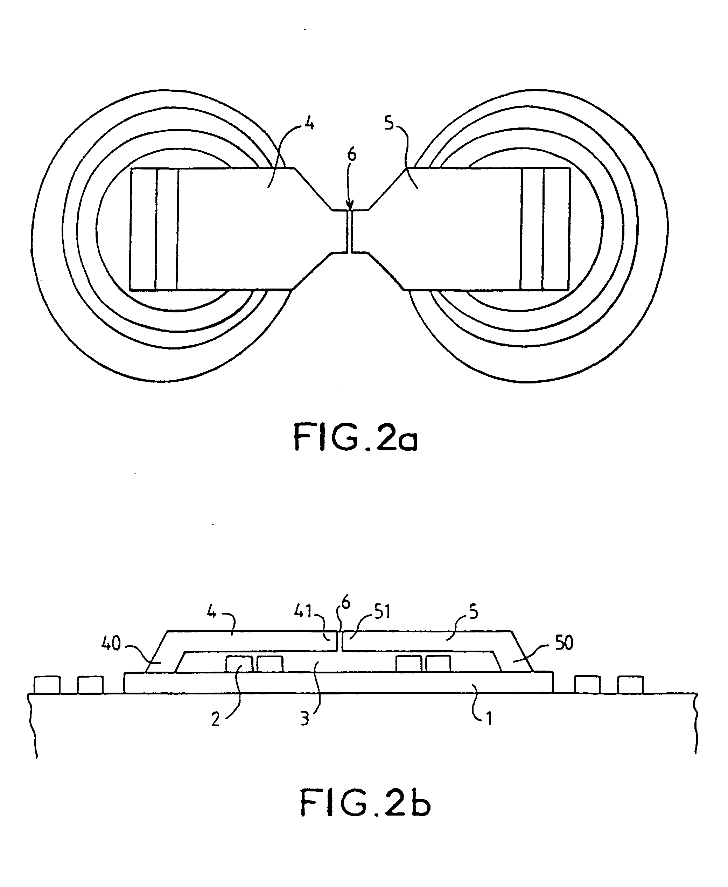

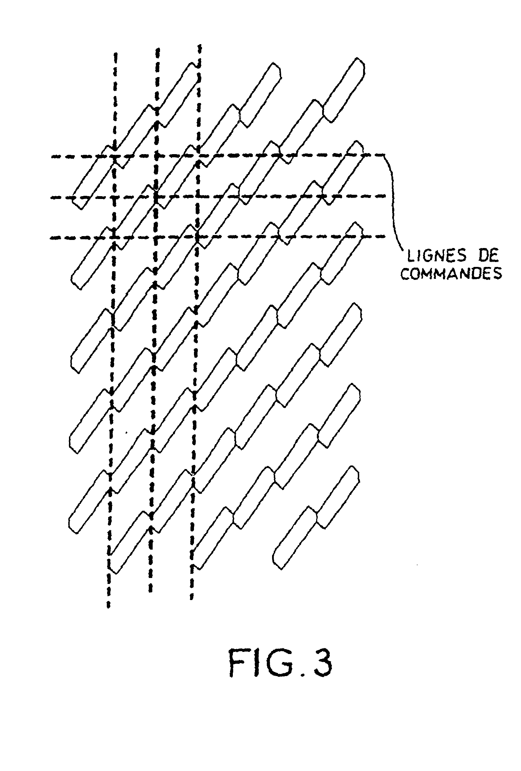

Les figures 2a, 2b montrent une tête dite de structure planaire. Cette tête comporte deux pôles magnétiques 4, 5 sensiblement situés dans un même plan. Les extrémités les plus éloignées de ces pôles sont couplées magnétiquement à une sous-couche magnétique 1 pour refermer le circuit magnétique de la tête. Les extrémités les plus proches sont séparées par un entrefer 6. Un ou plusieurs conducteurs d'induction de champ magnétique sont situés entre le pôle magnétique (4, 5) et la sous-couche magnétique 1. Cette tête est réalisée par dépôts, photolithographie et polissage collectif de la surface. Un sciage final permet de séparer les têtes. Ce procédé est collectif dans toutes les étapes et donc moins onéreux ; il permet par ailleurs la réalisation de réseaux matriciels de têtes comme le montre la figure 3.

Les têtes planaires présentent une faible profondeur d'entrefer; ceci est un avantage potentiel puisque l'inductance du bobinage s'en trouve réduit ; ceci réduit d'autant la tension de bruit à l'entrée du préamplificateur de lecture. Malheureusement, le flux doit parcourir un long chemin dans les pôles magnétiques avant de contourner le plan du bobinage ; si la perméabilité des pôles n'est pas très grande il y a fuite du flux au travers de ce plan et cela réduit considérablement l'efficacité de la tête. Une telle tête est connue par exemple d'après le document EP-A-0 475 397 qui a servi de base à la rédaction du préambule de la revendication 1 .

Les éléments constitutifs d'un circuit magnétique sont caractérisés par leur perméance. Celle-ci caractérise le flux traversant cet élément pour une circulation du champ d'induction magnétique unitaire. Cette circulation est homogène en dimension à un courant et la perméance est homogène à un coefficient d'inductance : $\Phi = Li$. Pour un cylindre orienté suivant les lignes de flux et de perméabilité homogène μ, la perméance dépend de la section "l" et de la longueur "S" de ce cylindre :

$$L = \mu \ l/s$$

La perméance totale d'un circuit magnétique est égale à l'inductance par spire carrée du bobinage qui le traverse.

On appelle généralement efficacité d'une tête magnétique le rapport entre la circulation du champ dans l'entrefer et le courant injecté dans le bobinage exprimé en Ampère-tours. Une tête est d'autant meilleure que son efficacité est proche de l'unité et que sa perméance est faible.

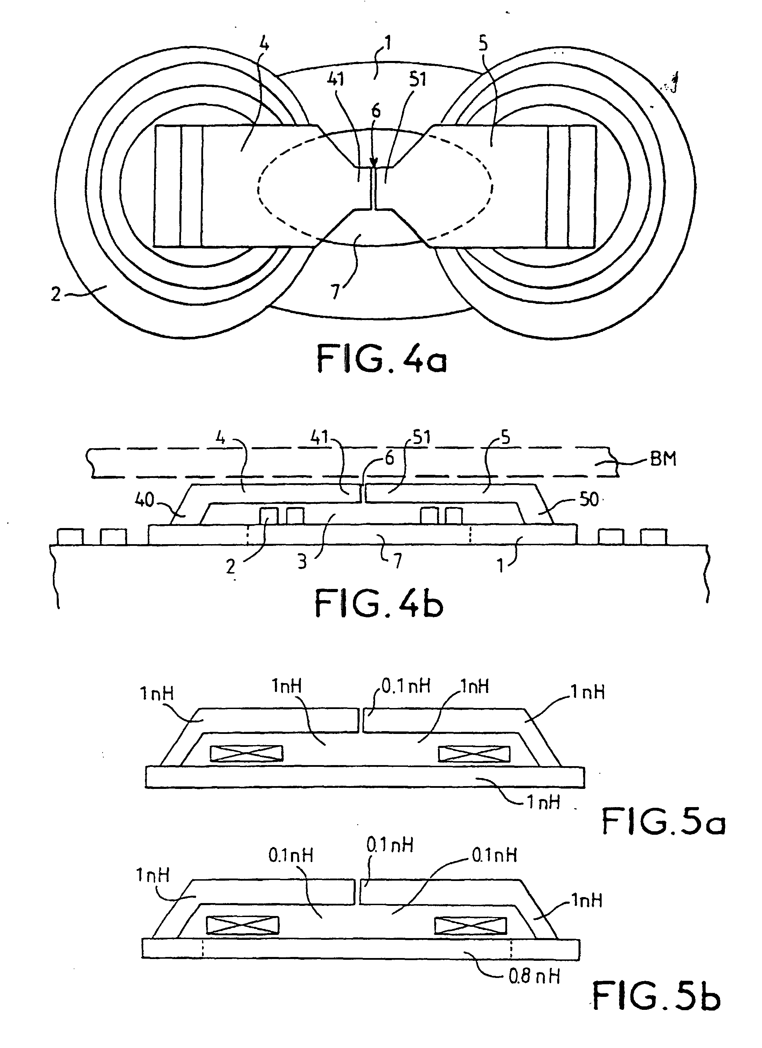

La figure 5a montre des valeurs typiques de perméance du circuit magnétique de la tête de la figure 2. Le flux circulant à la naissance des pôles supérieurs a tendance à être court-circuité par la proximité du pôle inférieur ; il en résulte non seulement une augmentation de l'impédance du bobinage mais aussi du fait de la perméabilité limitée des pôles une baisse de l'efficacité de la tête.

L'invention concerne une structure de tête magnétique ne présentant pas cet inconvénient.

L'invention concerne donc une tête magnétique comportant :

- une première couche magnétique ;
- au moins un conducteur d'induction de champ magnétique disposé sur cette couche magnétique ;
- une zone constituée d'une couche en matériau isolant englobant le conducteur et recouvrant une partie de la couche magnétique ;
- deux pôles magnétiques en couches contenues sensiblement dans un même plan et recouvrant la zone en matériau isolant et possédant chacun une première extrémité couplée magnétiquement avec la couche magnétique et une deuxième extrémité séparée de la deuxième extrémité de l'autre pôle par un entrefer qui est situé sur la zone en matériau isolant ; et dans laquelle

le plan de la couche magnétique comporte un évidement situé sous l'entrefer des pôles magnétiques et ne comportant pas de matériau magnétique, et caractérisée en ce que la partie restante de la couche magnétique, entoure l'évidement et est magnétiquement reliée auxdites premières extrémités.

Les différents objets et caractéristiques de l'invention apparaîtront plus clairement dans la description qui va suivre et dans les figures annexées qui représentent :

- les figures 1a, 1b, 2a, 2b et 3, des têtes magnétiques d'enregistrement/lecture connues dans la technique ;
- les figures 4a et 4b, un exemple de réalisation d'une tête magnétique selon l'invention ;
- les figures 5a et 5b, des comparaisons des caractéristiques d'une tête de l'art connu et d'une tête selon l'invention ;

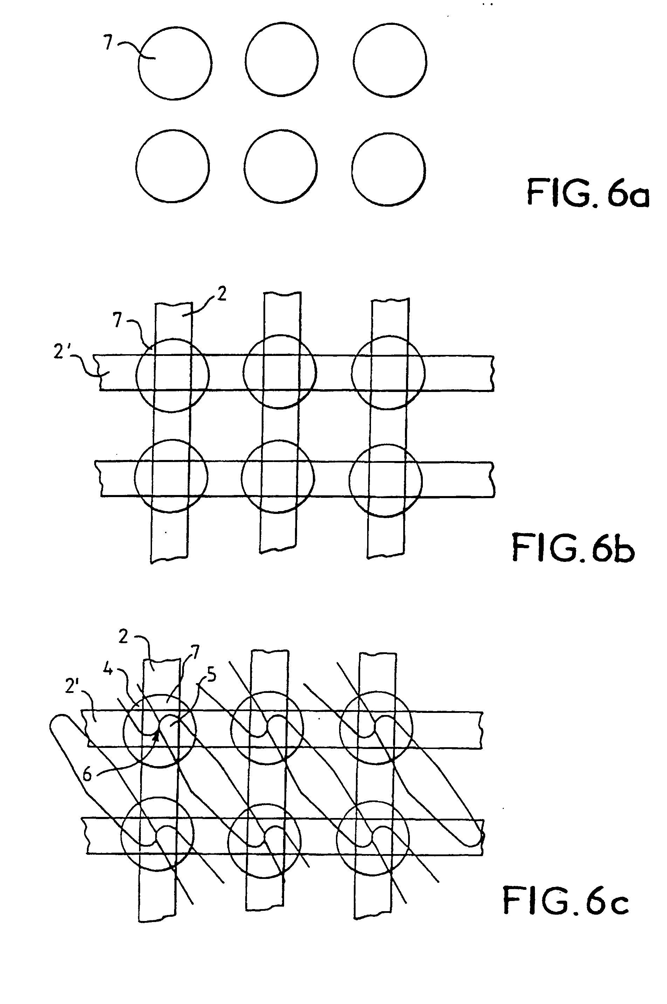

- les figures 6a à 6c, des étapes de réalisation d'une tête matricielle selon l'invention.

En se reportant aux figures 4a et 4b, on va donc décrire un exemple de réalisation d'une tête magnétique selon l'invention.

Cette tête comporte, comme celle des figures 2a et 2b, une couche magnétique 1 au-dessus de laquelle sont situés deux pôles magnétiques en couches 4 et 5 contenus sensiblement dans un même plan. Ces deux pôles sont séparés de la couche 1 par une couche d'isolant. Ces deux pôles à leurs extrémités 40 et 50 sont couplés magnétiquement à la couche 1. Les extrémités opposées 41 et 51 des pôles sont séparées par un entrefer 6. Un conducteur de bobinage 2 au moins est situé sous l'un des pôles magnétiques pour induire un champ magnétique. Sur les figures 4a et 4b, on a représenté à titre d'exemple deux bobinages entourant chacun un pôle.

Le fonctionnement de la tête sera tel qu'il permettra d'inscrire des informations sur un support d'information magnétique BM tel que celui représenté en traits interrompus sur la figure 4b. Cette inscription se fera à l'aide du flux magnétique passant de l'extrémité 41 du pôle 4 à l'extrémité 51 du pôle 5.

Selon l'invention, on prévoit dans le plan de la couche magnétique 1, sous les pôles magnétiques et notamment sous l'entrefer 6, une zone 7 ne comportant pas de matériau magnétique. Cette zone englobe de préférence la zone située sous les conducteurs 2, les pôles 4, 5 et l'entrefer 6. On peut même envisager que toute la zone située sous les pôles soit non magnétique, exceptées bien sûr les parties de la couche 1 qui sont couplées magnétiquement aux extrémités 40 et 50.

La figure 5b représente un exemple de tête magnétique selon l'invention sur laquelle on a indiqué les valeurs de perméance des différentes portions du circuit magnétique. Il apparaît que la tête magnétique selon l'invention (figure 5b) fournit des caractéristiques qui concourent à réaliser une tête magnétique plus efficace que les têtes magnétiques connues dans la technique telle que celle de la figure 5a.

L'invention est applicable à une tête à organisation matricielle comportant plusieurs têtes magnétiques commandées par des conducteurs de lignes d'induction de champ magnétique et des conducteurs de colonnes d'induction de champ magnétique.

Pour réaliser une telle tête, on prévoit de réaliser des évidements 7 dans un substrat magnétique. On réalise des conducteurs de lignes et de colonnes 2 et 2' qui se croisent au-dessus de ces évidements. On réalise ensuite des pôles magnétiques 4, 5 séparés par l'entrefer 6 qui est situé au-dessus d'un évidement 7.

La réalisation des pôles peut se faire comme cela est décrit dans la demande de brevet français n° 2 605 783.

## Revendications

1. Tête magnétique comportant :

   - une couche magnétique (1) ;
   - au moins un conducteur (2) d'induction de champ magnétique disposé sur cette couche magnétique (1) ;
   - une zone constituée d'une couche en matériau isolant (3) englobant le conducteur (2) et recouvrant une partie de la couche magnétique (1) ;
   - deux pôles magnétiques (4, 5) eh couches contenues sensiblement dans un même plan et recouvrant au moins partiellement la zone en matériau isolant (3) et possédant chacun une première extrémité (40, 50) couplée magnétiquement avec la couche magnétique (1) et une deuxième extrémité (41, 51) séparée de la deuxième extrémité de l'autre pôle par un entrefer (6) qui est situé sur la zone en matériau isolant (3) ; et dans laquelle

   le plan de la couche magnétique (1) comporte un évidement (7) situé sous l'entrefer des pôles magnétiques (4, 5) et ne comportant pas de matériau magnétique; et cacactérisée en ce que : la partie restante de la couche magnétique, entoure l'évidement et est magnétiquement reliée auxdites premières extrémités (40, 50).

2. Tête magnétique selon la revendication 1, **caractérisée en ce que** l'évidement (7) est situé sous le conducteur (2).

3. Tête magnétique selon la revendication 1 ou 2, **caractérisée en ce que** l'évidement (7) est rempli de matériau isolant.

## Patentansprüche

1. Magnetkopf

   - mit einer magnetischen Schicht (1),
   - mit mindestens einem Leiter (2) auf dieser Magnetschicht (1) zur Induktion eines Magnetfelds,
   - mit einer von einer Schicht aus isolierendem Material gebildeten Zone (3), die den Leiter (2) umgibt und einen Bereich der Magnetschicht (1) bedeckt,

- mit zwei Magnetpolen (4, 5) in Form von Schichten, die im wesentlichen in einer gemeinsamen Ebene liegen und mindestens teilweise die Zone (3) aus isolierendem Material bedecken, wobei jeder Pol ein erstes, magnetisch mit der magnetischen Schicht (1) gekoppeltes Ende (40, 50) und je ein zweites Ende (41, 51) besitzt, das vom zweiten Ende des jeweils anderen Pols durch einen Magnetspalt (6) getrennt ist, der sich in der Zone (3) aus isolierendem Material befindet, und wobei die Ebene der magnetischen Schicht (1) eine Ausnehmung (7) ohne magnetisches Material unter dem Magnetspalt der Magnetpole (4, 5) aufweist,

**dadurch gekennzeichnet, daß** der verbleibende Bereich der magnetischen Schicht die Ausnehmung umgibt und magnetisch mit den ersten Enden (40, 50) gekoppelt ist.

2. Magnetkopf nach Anspruch 1, **dadurch gekennzeichnet, daß** sich die Ausnehmung (7) unter dem Leiter (2) befindet.

3. Magnetkopf nach einem der Ansprüche 1 und 2, **dadurch gekennzeichnet, daß** die Ausnehmung (7) mit isolierendem Material gefüllt ist.

**Claims**

1. Magnetic head comprising:

   - a magnetic layer (1);
   - at least one magnetic field induction conductor (2) disposed on this magnetic layer (1);
   - a zone consisting of a layer of insulating material (3) encompassing the conductor (2) and covering a part of the magnetic layer (1);
   - two magnetic poles (4, 5) in the form of layers contained substantially in one and the same plane and at least partially covering the zone of insulating material (3) and each possessing a first end (40, 50) coupled magnetically with the magnetic layer (1) and a second end (41, 51) separated from the second end of the other pole by a gap (6) which is situated on the zone of insulating material (3); and in which

   the plane of the magnetic layer (1) comprises a recess (7) situated under the gap of the magnetic poles (4, 5) and comprising no magnetic material; and **characterized in that**: the remaining part of the magnetic layer surrounds the recess and is magnetically linked to the said first ends (40, 50).

2. Magnetic head according to Claim 1, **characterized in that** the recess (7) is situated under the conductor (2).

3. Magnetic head according to Claim 1 or 2, **characterized in that** the recess (7) is filled with insulating material.

FIG.1a

FIG.1b

FIG.2a

FIG.2b

LIGNES DE
COMMANDES

FIG.3

FIG.4a

FIG.4b

FIG.5a

FIG.5b

FIG. 6a

FIG. 6b

FIG. 6c